# EUROPÄISCHE PATENTSCHRIFT

(11) **EP 0 783 591 B1**
(45) Veröffentlichungstag und Bekanntmachung des Hinweises auf die Patenterteilung: **25.04.2001**
(21) Anmeldenummer: 96922677.8
(22) Anmeldetag: 18.07.1996
(51) Int. Cl.: C21B 13/00

(54) **VERFAHREN ZUR HERSTELLUNG VON FLÜSSIGEM ROHEISEN ODER STAHLVORPRODUKTEN UND ANLAGE ZUR DURCHFÜHRUNG DES VERFAHRENS**
PROCESS FOR PRODUCING LIQUID PIG IRON OR SEMI-FINISHED STEEL PRODUCTS AND INSTALLATION FOR IMPLEMENTING IT
PROCEDE DE FABRICATION DE FONTE BRUTE LIQUIDE OU DE PRODUITS INTERMEDIAIRES D'ACIER LIQUIDES, ET INSTALLATION POUR LA MISE EN OEUVRE DE CE PROCEDE

(30) Priorität: 19.07.1995 AT 1234959
(43) Veröffentlichungstag der Anmeldung: 16.07.1997
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: NAGL, Michael, 4204 Reichenau (AT)
(74) Vertreter: Kopecky, Helmut, Dipl.-Ing. Kopecky & Schwarz Patentanwälte
(86) Internationale Anmeldenummer: AT9600128
(87) Internationale Veröffentlichungsnummer: WO9704136

(56) Entgegenhaltungen:
- EP-A- 0 174 291
- DE-A- 2 660 884
- DE-B- 1 267 692
- FR-A- 2 011 742
- US-A- 3 264 096
- PATENT ABSTRACTS OF JAPAN vol. 13, no. 238 (C-603), 5.Juni 1989 & JP,A,01 047820 (KAWASAKI STEEL), 22.Februar 1989,

## Beschreibung

Die Erfindung betrifft ein Verfahren zur Herstellung von flüssigem Roheisen oder Stahlvorprodukten aus feinteilchenförmigem eisenhältigem Material, insbesondere reduziertem Eisenschwamm, in einem Einschmelzvergaser, in dem unter Zuführung von kohlenstoffhältigem Material eisenhältigem Material und sauerstoffhältigem Gas mittels eines Sauerstoffbrenners unter Bildung einer Hochtemperaturbrennzone bei gleichzeitiger Bildung eines Reduktionsgases in einem aus festen stückigen Kohlenstoffträgern gebildeten Bett das eisenhältige Material eingeschmolzen wird, gegebenenfalls nach vorheriger Fertigreduktion, sowie eine Anlage zur Durchführung des Verfahrens.

Ein Verfahren zur Herstellung von flüssigem Eisen aus feinteilchenförmigem eisenoxidhältigem Material, bei dem unter Zuführung von kohlenstoffhältigem Material, eisenoxidhältigem Material und sauerstoffhältigem Gas mittels eines Sauerstoffbrenners unter Bildung einer Hochtemperaturbrennzone, bei dem es auch zu: Bildung von reduzierendem Gas kommt und bei dem das eisenoxidhältige Material in einem aus festen stückigen Kohlenstofftragern gebildeten Bett reduziert und eingeschmolzen wird, ist aus der DE 26 60 884 A oder DE 1 267 692 B bekannt.

Gemäß der DE-A 26 60 884 ist eine vollständige Verbrennung des im Reaktor gebildeten Gases im Reaktor selbst beabsichtigt. Die DE 1 267 692 B zeigt als bekannt, den Sauerstoffbrenner 0 bis 20 cm oberhalb des Bettes in den Reaktor einmünden zu lassen, zeigt aber ansonsten keine Details der Anordnung des Sauerstoffbrenners. Keines der beiden Dokumente beschäftigt sich näher mit dem Problem des Austragens von Feinteilchen eines eisenhältigen Materials im Abgas.

Aus der EP-B - 0 010 627 ist ein Verfahren zur Herstellung von flüssigem Roheisen oder Stahlvorpodukten aus teilchenförmigem, eisenhältigem Material, insbesondere vorreduziertem Eisenschwamm, sowie zur Erzeugung von Reduktionsgas in einem Einschmelzvergaser bekannt, bei dem durch Zugabe von Kohle und durch Einblasen von sauerstoffhältigem Gas ein Wirbelbett aus Kokspartikeln gebildet wird. Das sauerstoffhältige Gas bzw. reiner Sauerstoff wird hierbei im unteren Bereich des Einschmelzvergasers eingeblasen. Das teilchenförmige eisenhältige Material, insbesondere vorreduzierter Eisenschwamm, und die stückige Kohle werden durch Chargieröffnungen in der Haube des Einschmelzvergasers von oben zugeführt, die fallenden Teilchen werden im Wirbelbett abgebremst und die eisenhältigen Teilchen werden während des Durchfallens durch das Koksfließbett reduziert und geschmolzen. Das aufgeschmolzene, von Schlacke bedeckte Metall sammelt sich am Boden des Einschmelzvergasers. Metall und Schlacke werden durch getrennte Abstichöffnungen abgezogen.

Ein Verfahren dieser Art ist jedoch für die Verarbeitung von feinteiligem Eisenschwamm nicht geeignet, da feinteiliger Eisenschwamm infolge der starken Gasströmung im Einschmelzvergaser sofort aus diesem ausgetragen werden würde. Das Austragen wird noch durch die Temperatur im oberen Bereich des Einschmelzvergasers begünstigt, da diese zu nieder ist, um ein Einschmelzen des Eisenschwamms am Ort der Einbringung sicherzustellen.

Aus der US-A - 5,082,251 ist es bekannt, eisenhältiges Feinerz im Wirbelschichtverfahren mit Hilfe eines aus Erdgas erzeugten Reduktionsgases direkt zu reduzieren. Hierbei wird das eisenreiche Feinerz in einem System von in Serie angeordneten Wirbelschichtreaktoren mit Hilfe von Reduktionsgas unter erhöhtem Druck reduziert. Das so erzeugte Eisenschwammpulver wird anschließend einer Heiß- oder Kaltbrikettierung unterworfen. Für eine Weiterverarbeitung des Eisenschwammpulvers sind eigene Einschmelzanlagen vorzusehen.

Aus der EP-A - 0 217 331 ist es bekannt, Feinerz in einem Wirbelschichtverfahren direkt vorzureduzieren und das vorreduzierte Feinerz in einen Einschmelzvergaser zu leiten und mittels eines Plasmabrenners unter Zuführung kohlenstoffhältigen Reduktionsmittels fertig zu reduzieren und aufzuschmelzen. In dem Einschmelzvergaser bildet sich ein Fließbett und darüber ein Wirbelbett aus Koks. Das vorreduzierte Feinerz bzw. das Eisenschwammpulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzensammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Aus der EP-B - 0 111 176 ist es bekannt, Eisenschwammpartikel und flüssiges Roheisen aus stückigem Eisenerz herzustellen, wobei das Eisenerz in einem Direktreduktions-Aggregat direktreduziert wird und aus dem Direktreduktions-Aggregat ausgetragene Eisenschwammpartikel in eine Grob- und Feinkornfraktion getrennt werden. Die Feinkornfraktion wird einem Einschmelzvergaser zugeführt, in dem aus eingebrachter Kohle und zugeführtem sauerstoffhältigem Gas die zum Schmelzen des Eisenschwammes erforderliche Wärme sowie das dem Direktreduktions-Aggregat zugeführte Reduktionsgas erzeugt werden. Die Feinkornfraktion wird in den Einschmelzvergaser über ein Fallrohr zugeleitet, das vom Kopf des Einschmelzvergasers bis in die Nähe des Kohlefließbettes ragt. Am Ende des Fallrohres ist eine Prallplatte zur Geschwindigkeitsminimierung der Feinkornfraktion vorgesehen, wodurch die Austrittsgeschwindigkeit der Feinkornfraktion aus dem Fallrohr sehr gering ist. An der Stelle der Einbringung ist die im Einschmelzvergaser herrschende Temperatur sehr niedrig, wodurch es nicht zu einem sofortigen Aufschmelzen der zugeführten Feinkornfraktion kommen kann. Dies und die niedrige Austrittsgeschwindigkeit aus dem Fallrohr bedingt, daß ein beträchtlicher Anteil der zugeführten Feinkornfraktion mit dem im Einschmelzvergaser erzeugten Reduktionsgas aus diesem wieder austritt. Das Einbringen einer größeren Menge an Feinkorn oder ausschließlich von Feinkorn ist gemäß diesem Verfahren nicht möglich.

Bei einem Verfahren gemäß der EP-A - 0 576 414 werden stückige eisenerzhältige Einsatzstoffe in einem Reduktionsschachtofen direkt reduziert, u.zw. mittels des in der Einschmelzvergasungszone gebildeten Reduktionsgases. Der so erhaltene Eisenschwamm wird dann der Einschmelzvergasungszone zugeführt. Um bei diesem bekannten Verfahren zusätzlich Feinerz und/oder Erzstaub, wie in einem Hüttenwerk anfallenden oxidischen Eisenfeinstaub, verwerten zu können, wird das Feinerz und/oder der Erzstaub mit festen Kohlenstoffträgern einem in die Einschmelzvergasungszone arbeitenden Staubbrenner zugeführt und in einer unterstöchiometrischen Verbrennungsreaktion umgesetzt. Ein solches Verfahren erlaubt eine effiziente Aufarbeitung von in einem Hüttenwerk anfallendem Feinerz und/oder Erzstaub, u.zw. bis zu einer Größenordnung von 20 bis 30 % des Gesamterzeinsatzes, und so ein kombiniertes Verarbeiten von Stückerz und Feinerz.

Die Erfindung bezweckt die Vermeidung dieser Nachteile und Schwierigkeiten und stellt sich die Aufgabe, ein Verfahren der eingangs beschriebenen Art sowie eine Anlage zur Durchführung des Verfahrens zu schaffen, bei welchen ein Verarbeiten von feinteilchenförmigem eisenhältigem Material, ohne ein Brikettieren zu erfordern, möglich ist und hierbei einerseits ein Austragen der zugeführten Feinteilchen, also des eisenhältigen Materials, gegebenenfalls im vorreduzierten oder im fertigreduzierten Zustand, durch das im Einschmelzvergaser erzeugte Reduktionsgas zuverlässig vermieden wird und andererseits ein gegebenenfalls erforderliches Fertigreduzieren gesichert ist. Die Erfindung stellt sich insbesondere die Aufgabe, ein Verfahren zu schaffen, mit dem ein zum Großteil, vorzugsweise ein zu 100 % aus feinteilchenförmigem eisenhältigem Material bestehender Einsatz zu Roheisen und/oder Stahlvormaterial unter Verwendung eines Einschmelzvergasers verarbeitet werden kann.

Diese Aufgabe wird erfindungsgemäß durch die Merkmale des Anspruchs 1 gelöst.

Im Beruhigungsraum oberhalb des Bettes wird die Geschwindigkeit des feinteilchenförmigen eisenhältigen Materials abgebremst, so daß eine Aufenthaltszeit in der Hochtemperaturzone erreicht wird, die zum Aufschmelzen des zugeführten eisenhältigen Materials ausreicht. Schlacke und Eisen können durch das Fließ- bzw. Festbett zum unteren Abschnitt des Einschmelzvergasers abfließen. Durch die sichergestellte Aufenthaltszeit ist eine Fertigreduktion von gegebenenfalls noch nicht fertigreduziertem eisenhältigem Material sichergestellt.

Aus der EP-A - 0 174 291 ist es bekannt, staubförmige sulfidische Nicht-Eisen-Metallerze, insbesondere Buntmetallerze, über einen Schmelzbrenner einem Einschmelzvergaser zuzuführen. Hierbei können auch größere Mengen sulfidischer Nicht-Eisen-Metallerze verarbeitet werden, da die zum Schmelzen der Erzteilchen erforderliche Wärme durch die exotherme Umsetzung des sulfidischen Erzes mit Sauerstoff im Brenner erzeugt wird.

Die Kohle zur Bildung einer Kohlenstoff-Wirbelschicht wird bei diesem bekannten Verfahren gesondert in die Einschmelzvergasungszone chargiert. Bei einem Verfahren dieser Art ist es nicht möglich, oxidische Feinerze einzusetzen, da hierbei eine ein Schmelzen dieser oxidischen Feinerze bewirkende Wärme fehlen würde. Die Folge wäre durch die am oberen Ende des Einschmelzvergasers angeordnete Feinerzzuführung das Austragen dieser Feinerze durch das aus der Einschmelzvergasungszone austretende und aus dem Einschmelzvergaser abgeleitete Reduktionsgas.

Zur Vermeidung von Oxidation des in die Einschmelzvergasungszone eingebrachten feinteilchenförmigen eisenhältigen Materials durch den dem Sauerstoffbrenner zugeführten Sauerstoff bzw. das sauerstoffhältige Gas wird erfindungsgemäß vorteilhaft der Hochtemperaturbrennzone unmittelbar Feinkohle zugeführt, vorzugsweise in dieselbe eingeblasen.

Gemäß einer bevorzugten Ausführungsform wird mit dem in der Einschmelzvergasungszone gebildeten Reduktionsgas Feinerz im Wirbelschichtverfahren reduziert, wobei das aus dem Einschmelzvergaser austretende Reduktionsgas direkt, d.h. ohne vorherige Staubabscheidung, der Wirbelschichtreduktion zugeführt wird. Hierbei wird der mit dem Reduktionsgas aus der Einschmelzvergasungszone ausgetragene Koksstaub der Wirbelschichtreduktionszone zugeführt, wobei er die Gefahr von "sticking" vermindert. Er wird anschließend mit dem reduzierten Feinerz über den Sauerstoffbrenner wieder der Einschmelzvergasungszone zugeführt, so daß er nicht verloren ist.

Vorteilhaft werden stückiges kohlenstoffhältiges Material sowie stückiges eisenhältiges Material, die aufgrund ihrer Größe nicht mit dem Gasstrom ausgetragen werden können, zusätzlich in die Einschmelzvergasungszone eingebracht, u.zw. über im oberen Bereich des Einschmelzvergasers mündende Zuleitungen. Somit können beim erfindungsgemäßen Verfahren herkömmliche Einschmelzvergaser ohne wesentliche konstruktive Änderungen zum Einsatz gelangen.

Eine Anlage zur Durchführung des Verfahrens mit einem Einschmelzvergaser mit Zu- und Ableitungen für die Zugabe von kohlenstoffhältigem Material, eisenhältigem Material, für den Abzug des erzeugten Export-Reduktionsgases und für die Zuleitung von sauerstoffhältigem Gas, sowie weiters mit einem Schlacken- und Eisen-Schmelzenabstich, wobei ein Brenner für die Zuführung von Sauerstoffhältigem Gas sowie feinteilchenförmigen, eisenhältigem Material in dem Einschmelzvergaser mündet und ein unterer Abschnitt des Einschmelzvergasers zum Auffangen des geschmolzenen Roheisens und der flüssigen Schlacke und ein darüber liegender mittlerer Abschnitt zur Aufnahme eines Bettes aus festen stückigen Kohlenstoffträgern vorgeschen sind, ist gekennzeichnet durch die Merkmale des Anspruchs 6.

Vorzugsweise sind in unmittelbarer Nähe des Brennerkopfes Lanzenmündungen von Feinkohle zuführenden Zuführlanzen vorgesehen.

Gemäß einer bevorzugten Ausführungsform ist der Brenner als Brennlanze ausgebildet, die vom Kopf des Einschmelzvergasers vertikal und zentral in das Innere des Einschmelzvergasers ragt. Der Brenner kann beispielsweise wie in der EP-A - 0 481 955 beschrieben ausgeführt sein. Er kann zusätzlich mit einem Ringspalt zur gleichzeitigen Zuführung von fester feinteiliger Kohle ausgestattet sein.

Zweckmäßig ragen die Zuführlanzen in den Einschmelzvergaser von der Seite her hinein, vorzugsweise schräg nach unten gerichtet.

Es ist von Vorteil, wenn eine Reduktionsgas-Ableitung vom Beruhigungsraum des Einschmelzvergasers ausgehend direkt, d.h. ohne Zwischenschaltung einer Entstaubungseinrichtung, in einen der Direktreduktion von feinteilchenförmigem Eisenerz dienenden Wirbelschichtreaktor mündet, und daß eine vom Wirbelschichtreaktor ausgehende und reduziertes Feinerz ableitende Leitung in den Sauerstoffbrenner mündet.

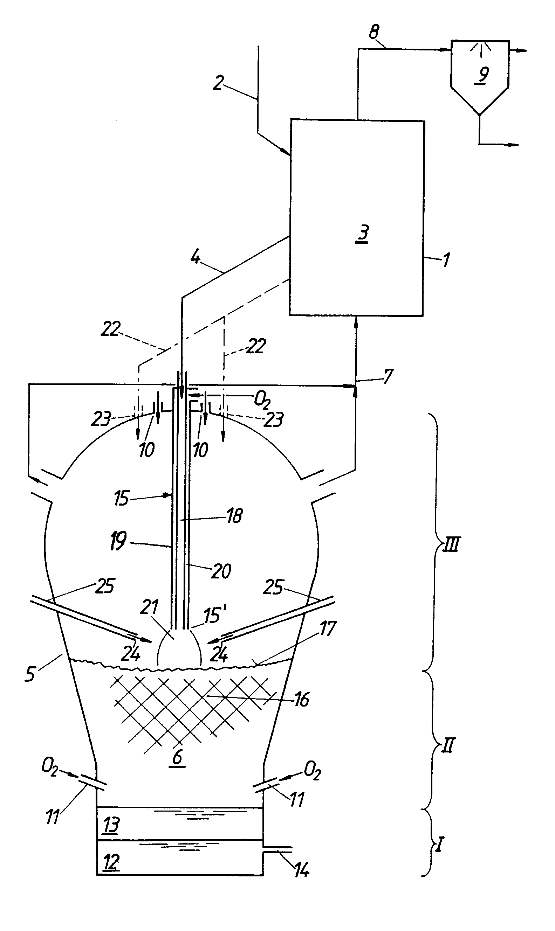

Die Erfindung ist nachfolgend anhand eines in der Zeichnung schematisch dargestellten Ausführungsbeispieles näher erläutert. Die erfindungsgemäße Anlage weist einen Wirbelschichtreaktor 1 auf, in den eisenhältiges Feinerz oder eisenhältiges Erz (z.B. 1461 kg Erz/t Roheisen) mit einem großen (mehr als 50 %) Anteil an Feinerz über eine Erzzuleitung 2 zugeleitet wird. In diesem Wirbelschichtreaktor 1 findet eine Vor- bzw. gegebenenfalls eine Fertigreduktion des Feinerzes in einer Wirbelschichtzone 3 statt.

| Angaben zum Erz: | |
|---|---|
| Fe_{ges} | 66,3 % |
| Fe₂O₃ | 94,7 % |
| Korngröße | 0 bis 8 mm |

Anstelle des einzigen Wirbelschichtreaktors 1 könnten mehrere in Serie hintereinander geschaltete Wirbelschichtreaktoren vorgesehen sein, wobei das Feinerz von Wirbelschichtreaktor zu Wirbelschichtreaktor über Förderleitungen geleitet wird, u.zw. ähnlich, wie in der US-A - 5,082,251 beschrieben.

Das vor- bzw. fertigreduzierte Feinerz, also das Eisenschwammpulver (530 kg/t Roheisen), wird über eine Förderleitung 4 in später noch näher beschriebener Weise einem Einschmelzvergaser 5 zugeführt. Im Einschmelzvergaser 5 wird in einer Einschmelzvergasungszone 6 aus Kohle und sauerstoffhältigem Gas ein CO- und H₂-hältiges Reduktionsgas (1715 Nm³/t Roheisen bei 850°C) erzeugt, das über eine Reduktionsgaszuleitung 7 in den Wirbelschichtreaktor 1 eingeleitet wird.

| Analyse Reduktionsgas: | |
|---|---|
| CO | 63,4 % |
| CO₂ | 4,3 % |
| H₂ | 26,3 % |
| Rest (H₂O, N₂, CH₄) | |

Das Reduktionsgas durchströmt dann im Gegenstrom zum Erzdurchfluß diesen Wirbelschichtreaktor 1 und wird aus dem Wirbelschichtreaktor 1 über eine Topgas-Ableitung 8 abgeleitet und anschließend in einem Naßwäscher 9 gekühlt und gewaschen und steht dann als Topgas (1639 Nm³/t Roheisen) Verbrauchern zur Verfügung.

| Analyse Topgas: | |
|---|---|
| CO | 42 % |
| CO₂ | 33,2 % |
| H₂ | 18,4 % |
| Rest (H₂O, N₂, CH₄) | |

Heizwert Topgas: 7681 kJ/m³ normal

Der Einschmelzvergaser 5 weist Zuführungen 10 für feste Kohlenstoffträger in stückiger Form (700 kg Grobkohle/t Roheisen), Zuführungen 11 für sauerstoffhältige Gase (275 Nm³O₂/t Roheisen) sowie gegebenenfalls Zuführungen für bei Raumtemperatur flüssige oder gasförmige Kohlenstoffträger, wie Kohlenwasserstoffe, sowie für gebrannte Zuschläge auf.

In dem Einschmelzvergaser 5 sammelt sich in einem unteren Abschnitt I unterhalb der Einschmelzvergasungszone 6 schmelzflüssiges Roheisen 12 (1000 kg Roheisen/t Roheisen) bzw. schmelzflüssiges Stahlvormaterial und schmelzflüssige Schlacke 13 (303 kg/t Roheisen), die über einen Abstich 14 abgestochen werden.

| Das Roheisen weist im Mittel folgende Analyse auf: | |
|---|---|
| C | 4,3% |
| Si | 0,4% |
| Mn | 0,08 % |
| P | 0,1 % |
| S | 0,05 % |
| Rest | (Fe) |

Die Schlacke hat im Mittel eine Basizität von B2 (CaO/SiO₂) =1,1

In einem über dem unteren Abschnitt I angeordneten Abschnitt II des Einschmelzvergasers 5 kommt es zur Ausbildung eines Bettes 16, vorzugsweise eines Festbettes und/oder eines Wirbelbettes, aus den festen Kohlenstoffträgern. Der oberhalb des mittleren Abschnittes II vorgesehene obere Abschnitt III fungiert als Beruhigungsraum für das sich im Einschmelzvergaser 5 bildende Reduktionsgas und mit dem vom Reduktionsgas gebildeten Gasstrom mitgerissene Feststoffteilchen.

Das vor- bzw. fertigreduzierte Feinerz wird in die Einschmelzvergasungszone 6 mittels eines von oben und etwa vertikal nach unten gerichteten Sauerstoffbrenners 15 eingeleitet, wobei der Brennerkopf 15' knapp oberhalb der Oberfläche 17 des Bettes 16 zu liegen kommt. Der Brennerkopf 15' ist hinsichtlich des Querschnittes des Einschmelzvergasers 5 in dessen Zentralbereich, d.h. im Abstand von dessen Seitenwand, angeordnet. Vorzugsweise ist nur ein einziger Brennerkopf 15', der an der vertikalen Längsmittelachse des Einschmelzvergasers 5 zuliegen kommt, vorgesehen. Der Brenner 15 weist ein zentrales Innenrohr 18 zur Zuführung des teil- bzw. fertigreduzierten Feinerzes und einen das zentrale Innenrohr 18 umgebenden, von einem gekühlten Außenrohr 19 begrenzten Ringspalt 20 zur Zuführung von Sauerstoff (275 Nm³O₂/t Roheisen) bzw. eines sauerstoffhältigen Gases auf.

An der Austrittsstelle des sauerstoffhältigen Gases und des zugeführten eisenhältigen Materials kommt es zur Ausbildung einer Hochtemperatur-Brennzone 21, in der das eisenhältige Material, das über den Brennerkopf in Richtung zur Oberfläche 17 des Bettes 16 eingeblasen wird, infolge Abbremsens an der Oberfläche 17 des Bettes 16 und durch das Auftreffen auf diese Oberfläche 17 eine Aufenthaltszeit erreicht, die zum Aufschmelzen des eisenhältigen Materials ausreicht. Die sich dabei bildende Schlacke und das aufgeschmolzene Eisen können durch das Bett 16 zum unteren Abschnitt I des Einschmelzvergasers 5 abfließen.

Es kann von Vorteil sein, insbesondere bei größeren Schwankungen der Korngröße des eingesetzten Feinerzes bzw. bei einem gewissen Anteil von gröberen Erzteilchen, das aus dem Wirbelschichtreaktor 1 austretende eisenhältige Material zu fraktionieren und dem Brenner 15 nur die Feinkornfraktion zuzuführen, die Grobkornfraktion (vorzugsweise 2 bis 8 mm) (530 kg/t Roheisen) hingegen über eine eigene Zuführleitung 22 und Zuführöffnungen 23 im oberen Bereich des Einschmelzvergasers 5 in diesen zu chargieren. Vorzugsweise liegt die Korngröße der über den Brenner 15 zugeführten Teilchen in einem Bereich von 0 bis 2 mm.

| Angaben zur Kohle: | |
|---|---|
| Elementaranalyse: | |
| C | 73,6 % |
| H | 4,4 % |
| N | 1,7 % |
| O | 6,2 % |
| S | 1,0 % |
| | |
| Cfix | 60,8 % |
| Flüchtige | 25,6 % |
| Asche | 8,6 % |

| Korngröße der Feinkohle: | |
|---|---|
| 0 bis 2 mm | |

| Korngröße der Grobkohle: | |
|---|---|
| 8 bis 50 mm | |

Knapp benachbart zum Brennerkopf 15' sind Lanzenmündungen 24 von Feinkohle (250 kg/t Roheisen) zuführenden Zuführungslanzen 25 in Stellung gebracht. Hierdurch kann Feinkohle von der Seite her in die Hochtemperatur-Brennzone 21 unter den Brennerkopf 15' geblasen werden, wodurch es gelingt, eine Oxidation des teil- bzw. fertigreduzierten Feinerzes durch den über den Brennerkopf 15' zugeführten Sauerstoff zu verhindern.

Die zugeführte Feinkohle ermöglicht weiters eine Reduzierung der Temperatur des in der Einschmelzvergasungszone 6 gebildeten Reduktionsgases, und dieses kann wie bei herkömmlichen Einschmelzvergasern abgeleitet werden.

Eine Entstaubungseinrichtung erübrigt sich für das Reduktionsgas ebenso wie eine Staubrückführung, da der mit dem Reduktionsgas ausgetragene Koksstaub in der Wirbelschicht-Reduktionszone 3 des Wirbelschichtreaktors 1 die Gefahr des "stickings" vermindert, also keineswegs störend ist, und über den Sauerstoffbrenner 15 wieder in die Einschmelzvergasungszone 6 gelangt. Von Vorteil kann jedoch zwecks Temperatureinstellung des Reduktionsgases eine Waschung einer Teilmenge desselben mit anschließender Rezirkulierung sein.

## Patentansprüche

1. Verfahren zur Herstellung von flüssigem Roheisen (12) oder Stahlvorprodukten aus feinteilchenförmigem eisenhältigem Material, insbesondere reduziertem Eisenschwamm, in einem Einschmelzvergaser (5), in dem unter Zuführung von kohlenstoffhältigem Material, eisenhältigem Material und sauerstoffhältigem Gas mittels eines Sauerstoffbrenners (15) unter Bildung einer Hochtemperaturbrennzone (21) gleichzeitiger Bildung eines Reduktionsgases in einem aus festen stückigen Kohlenstoffträgern gebildeten Bett (16) das eisenhältige Material eingeschmolzen wird, gegebenenfalls nach vorheriger Fertigreduktion, dadurch gekennzeichnet, daß das eisenhältige Material und das Sauerstoffhältige Gas mittels des in das Innere des Einschmelzvergasers (5) ragenden Sauerstoffbrenners (15) erst am unteren Ende eines oberhalb des Bettes (16) angeordneten Beruhigungsraumes (III) für im Bett (16) gebildetes Reduktionsgas im Einschmelzvergaser (5) zentral knapp oberhalb des Bettes (16) in dessen unmittelbarem Nahbereich eingebracht wird.

2. Verfahren nach Anspruch 1, dadurch gekennzeichnet, daß ein in der Hochtemperaturbrennzone (21) erzeugter Brennstrahl gegen die Oberfläche (17) des Bettes (16) gerichtet und mit diesem das eisenhältige Material gegen die Oberfäche (17) des Bettes (16) geblasen wird.

3. Verfahren nach Anspruch 1 oder 2, dadurch gekennzeichnet, daß der Hochtemperaturbrennzone (21) unmittelbar Feinkohle zugeführt, vorzugsweise in dieselbe eingeblasen wird.

4. Verfahren nach einem oder mehreren der Ansprüche 1 bis 3, dadurch gekennzeichnet, daß mit dem in der Einschmelzvergasungszone (6) gebildeten Export-Reduktionsgas Feinerz im Wirbelschichtverfahren (3) reduziert wird, wobei das aus dem Einschmelzvergaser (5) austretende Export-Reduktionsgas direkt, d.h. ohne vorherige Staubabscheidung, der Wirbelschichtreduktion (3) zugeführt wird.

5. Verfahren nach einem oder mehreren der Ansprüche 1 bis 4, dadurch gekennzeichnet, daß stückiges kohlenstoffhältiges Material sowie stückiges eisenhältiges Material zusätzlich in die Einschmelzvergasungszone (6) eingebracht werden, u.zw. über im oberen Bereich des Einschmelzvergasers (5) mündende Zuleitungen (10, 22, 23).

6. Anlage zur Durchführung des Verfahrens nach einem oder mehreren der Ansprüche 1 bis 5, mit einem Einschmelzvergaser (5) mit Zu- und Ableitungen (4, 7, 10, 11) für die Zugabe von kohlenstoffhältigem Material, eisenhältigem Material, für den Abzug des erzeugten Reduktionsgases und für die Zuleitung von sauerstoffhältigem Gas, sowie weiters mit einem Schlacken- und Eisen-Schmelzenabstich (14), wobei ein Brenner (15) für die Zuführung von Sauerstoffhältigem Gas sowie feinteilchenförmigem, eisenhältigem Material in dem Einschmelzvergaser (5) mündet und ein unterer Abschnitt (I) des Einschmelzvergasers (5) zum Auffangen des geschmolzenen Roheisens (12) und der flüssigen Schlacke (13) und ein darüber liegender mittlerer Abschnitt (II) zur Aufnahme eines Bettes (16) aus festen stückigen Kohlenstoffträgern vorgesehen sind, dadurch gekennzeichnet, daß der Brenner (15) einen oberen Abschnill (III) des Einschmelzvergasers (5) zentral durchläuft und mit seinem Brennerkopf (15') erst im Bereich des Überganges vom mittleren Abschnitt (II) zum oberen Abschnitt (III) endet, wobei der obere Abschnitt (III) einen Beruhigungsraum für im Einschmelzvergaser (5) gebildetes Reduktionsgas darstellt.

7. Anlage nach Anspruch 6, dadurch gekennzeichnet, daß der Brennerkopf (15') gegen die Oberfläche (17) des Bettes (16) gerichtet ist.

8. Anlage nach Anspruch 6 oder 7, dadurch gekennzeichnet, daß in unmittelbarer Nähe des Brennerkopfes (15') Lanzenmündungen (24) von Feinkohle zuführenden Zuführlanzen (25) vorgesehen sind.

9. Anlage nach einem oder mehreren der Ansprüche 6 bis 8, dadurch gekennzeichnet, daß der Brenner (15) als Brennlanze ausgebildet ist, die vom Kopf des Einschmelzvergasers (5) vertikal und zentral in das Innere des Einschmelzvergasers (5) ragt.

10. Anlage nach Anspruch 8 oder 9, dadurch gekennzeichnet, daß die Zuführlanzen (25) in den Einschmelzvergaser (5) von der Seite her hineinragen, vorzugsweise schräg nach unten gerichtet.

11. Anlage nach einem oder mehreren der Ansprüche 6 bis 10, dadurch gekennzeichnet, daß eine Reduktionsgas-Ableitung (7) vom Beruhigungsraum (III) des Einschmelzvergasers (5) ausgehend direkt, d.h. ohne Zwischenschaltung einer Entstaubungseinrichtung, in einen der Direktreduktion von feinteilchenförmigem Eisenerz dienenden Wirbelschichtreaktor (1) mündet, und daß eine vom Wirbelschichtreaktor (1) ausgehende und reduziertes Feinerz ableitende Leitung (4) in den Sauerstoffbrenner mündet.

## Claims

1. A process for the production of molten pig iron (12) or steel pre-products from fine-particulate iron-containing material, in particular reduced sponge iron, in a melter gasifier (5), in which the iron-containing material is melted under supply of carbon-containing material, iron-containing material and oxygen-containing gas by means of an oxygen burner (15) under simultaneous formation of a high-temperature combustion zone (21) and a reducing gas in a bed (16) formed of solid lumpy carbon carriers, optionally upon previous complete reduction, characterized in that the iron-containing material and the oxygen-containing gas are supplied, by means of the oxygen burner (15), which projects into the interior of the melter gasifier (5), just at the lower end of a killing space (III) for reducing gas formed in the bed (16), arranged above the bed (16), in the melter gasifier (5) centrally, closely above the bed (16) in its immediate vicinity.

2. A process according to claim 1, characterized in that a burning jet formed in the high-temperature combustion zone (21) is directed towards the surface (17) of the bed (16) and is utilized for blowing the iron-containing material towards the surface (17) of the bed (16).

3. A process according to claim 1 or 2, characterized in that fine coal is introduced, or preferably blown, into the high-temperature combustion zone (21) directly.

4. A process according to one or several of claims 1 to 3, characterized in that fine ore is reduced in the fluidized bed process (3) by means of the reducing gas formed in the meltdown gasifying zone (6), wherein the reducing gas emerging from the melter gasifier (5) is conveyed to the fluidized bed reduction (3) directly, i.e. without prior dust separation.

5. A process according to one or several of claims 1 to 4, characterized in that lumpy carbon-containing material as well as lumpy iron-containing material are additionally introduced into the meltdown gasifying zone (6) via supply ducts (10, 22, 23) leading into the upper section of the melter gasifier (5).

6. A plant for carrying out the process according to one or several of claims 1 to 5, comprising a melter gasifier (5) including supply and discharge ducts (4, 7, 10, 11) for adding carbon-containing material, iron-containing material, for discharging the reducing gas produced and for feeding oxygen-containing gas, as well as a slag and iron-melt tap (14), wherein a burner (15) for feeding oxygen-containing gas and fine-particulate, ironcontaining material runs into the melter gasifier (5) and a lower section (I) of the melter gasifier (5) is provided for collecting the molten pig iron (12) and the liquid slag (13) and a superimposed central section (II) is provided for accommodating a bed (16) of solid lumpy carbon carriers, characterized in that the burner (15) passes centrally through an upper section (III) of the melter gasifier (5) and ends, with its burner head (15'), just in the transition area from the central section (II) to the upper section (III), the upper section (III) constituting a killing space for reducing gas formed in the melter gasifier (5).

7. A plant according to claim 6, characterized in that the burner head (15') is directed towards the surface (17) of the bed (16).

8. A plant according to claim 6 or 7, characterized in that lance openings (24) of supply lances (25) feeding fine coal are provided in the immediate vicinity of the burner head (15').

9. A plant according to one or several of claims 6 to 8, characterized in that the burner (15) is designed as a burning lance, which, departing from the head of the melter gasifier (5), projects into the interior of the melter gasifier (5) vertically and centrally.

10. A plant according to claim 8 or 9, characterized in that the supply lances (25) project into the melter gasifier (5) laterally, preferably slanting downward.

11. A plant according to one or several of claims 6 to 10, characterized in that departing from the killing space (III) of the melter gasifier (5), a reducing-gas discharge duct (7) runs directly, i. e. with no dedusting means arranged intermediately, into a fluidized bed reactor (1) utilized for directly reducing fine-particulate iron ore, and that departing from the fluidized bed reactor (1) a duct (4) for discharging reduced fine ore runs into the oxygen burner.

## Revendications

1. Procédé pour la préparation de fonte brute liquide (12) ou de produits intermédiaires en acier à partir d'un matériau contenant du fer dans la forme de fines particules, en particulier à partir de fer spongieux réduit, dans un gazéificateur de fusion (5), dans lequel le matériau contenant du fer est fondu avec l'introduction d'un matériau contenant du carbone, d'un matériau contenant du fer et d'un gaz contenant de l'oxygène au moyen d'un brûleur à oxygène (15) avec la formation d'une zone de calcination de température élevée (21) pour une formation simultanée d'un gaz de réduction dans un lit (16) constitué de supports solides de carbone en morceaux éventuellement après une réduction préalable achevée, caractérisé en ce que le matériau contenant du fer et le gaz contenant de l'oxygène sont introduits au moyen du brûleur à l'oxygène (15) se dressant à l'intérieur du gazéificateur de fusion (5) uniquement à l'extrémité inférieure d'un espace de repos (III) pour le gaz de réduction formé dans le lit (16), disposé au-dessus du lit (16) dans le gazéificateur de fusion (5) au centre juste au-dessus du lit (16), dans son voisinage immédiat.

2. Procédé selon la revendication 1, caractérisé en ce qu'un jet de calcination produit dans la zone de calcination à température élevée (21) est dirigé contre la surface (17) du lit (16) et le matériau contenant du fer est soufflé contre la surface (17) du lit (16) avec celui-ci.

3. Procédé selon la revendication 1 ou 2, caractérisé en ce que des fines de charbon sont introduites directement dans la zone de calcination à température élevée (21), sont de préférence soufflées dans celle-ci.

4. Procédé selon l'une ou plusieurs quelconques des revendications 1 à 3, caractérisé en ce que des fines de minerai sont réduites dans un procédé à couche fluidisée (3) avec le gaz de réduction-export formé dans la zone de gazéification de fusion (6), le gaz de réduction-export sortant du gazéificateur de fusion (5) étant directement introduit dans la réduction en couche fluidisée (3), c'est-à-dire sans dépoussiérage préalable.

5. Procédé selon l'une ou plusieurs quelconques des revendications 1 à 4, caractérisé en ce que du matériau contenant du carbone en morceaux ainsi que du matériau contenant du fer en morceaux sont en plus introduits dans la zone de gazéification de fusion (6), pour préciser par l'intermédiaire de canalisations (10, 22, 23), débouchant dans le domaine supérieur du gazéificateur de fusion (5).

6. Dispositif pour la réalisation du procédé selon l'une ou plusieurs quelconques des revendications 1 à 5 muni d'un gazéificateur de fusion (5) avec des canalisations d'entrée et de sortie (4, 7, 10, 11) pour l'addition d'un matériau contenant du carbone, d'un matériau contenant du fer, pour l'évacuation du gaz de réduction produit et pour l'introduction de gaz contenant de l'oxygène ainsi qu'en plus d'une coulée de fusion (14) pour le laitier et le fer, un brûleur (15) pour l'introduction d'un gaz contenant de l'oxygène ainsi que d'un matériau contenant du fer dans la forme de fines particules débouchant dans le gazéificateur de fusion (5) et un tronçon inférieur (I) du gazéificateur de fusion (5) pour recueillir la fonte brute fondue (12) et le laitier liquide (13) et un tronçon de milieu (II) disposé au-dessus de celui-ci pour recueillir un lit (16) constitué de supports solides de carbone en morceaux étant prévus, caractérisé en ce que le brûleur (15) traverse au centre un tronçon supérieur (III) du gazéificateur de fusion (5) avec sa tête de brûleur (15') qui s'arrête juste dans le domaine de la transition du tronçon de milieu (II) au tronçon supérieur (III), le tronçon supérieur (III) constituant un espace de repos pour le gaz de réduction formé dans le gazéificateur de fusion (5).

7. Dispositif selon la revendication 6, caractérisé en ce que la tête de brûleur (15') est dirigée contre la surface (17) du lit (16).

8. Dispositif selon la revendication 6 ou 7, caractérisé en ce que des orifices de lances (24) de lances d'introduction (25) pour l'introduction des fines de charbon sont prévus à proximité immédiate de la tête de brûleur (15').

9. Dispositif selon l'une ou plusieurs quelconques des revendication 6 à 8, caractérisé en ce que le brûleur (15) est formé comme une lance de brûleur, laquelle se dresse en partant de la tête du gazéificateur de fusion (5) à la verticale et au centre à l'intérieur du gazéificateur de fusion (5).

10. Dispositif selon la revendication 8 ou 9, caractérisé en ce que les lances d'introduction (25) se dressent à l'intérieur du gazéificateur de fusion (5) à partir du côté, en étant de préférence inclinées vers le bas.

11. Dispositif selon l'une ou plusieurs quelconques des revendication 6 à 10, caractérisé en ce qu'une canalisation de sortie de gaz de réduction (7) sort de l'espace de repos (III) du gazéificateur de fusion (5) directement dans un réacteur à couche fluidisée (1) servant à la réduction directe de minerai de fer dans la forme de fines particules, c'est-à-dire sans raccordement intermédiaire d'un dispositif de dépoussiérage, et en ce qu'une canalisation (4) sortant du réacteur à couche fluidisée (I) et évacuant des fines de minerai réduites débouche dans le brûleur à oxygène.
